# EUROPÄISCHE PATENTSCHRIFT

(11) **EP 1 944 823 B1**
(45) Veröffentlichungstag und Bekanntmachung des Hinweises auf die Patenterteilung: **19.03.2014**
(21) Anmeldenummer: 07124113.7
(22) Anmeldetag: 28.12.2007
(51) Int. Cl.: H01M 8/04, H01M 8/06

(54) **Brennstoffzellensystem und zugehöriges Betriebsverfahren**
Fuel cell system and method of operation
Système de piles à combustible et procédé d'opération

(30) Priorität: 12.01.2007 DE 102007002653
(43) Veröffentlichungstag der Anmeldung: 16.07.2008
(73) Patentinhaber: Eberspächer Climate Control Systems GmbH & Co. KG, 73730 Esslingen (DE)
(72) Erfinder: Kienzle, Birgit, 89073, Ulm (DE); Reiners, Karsten, 73732, Esslingen (DE)
(74) Vertreter: Bernhard, Uwe

(56) Entgegenhaltungen:
- DE-A1- 4 446 841
- DE-A1- 19 822 691
- DE-A1- 19 961 057
- US-A- 4 650 727

## Beschreibung

Die vorliegende Erfindung betrifft ein Brennstoffzellensystem, insbesondere in einem Kraftfahrzeug, mit den Merkmalen des Oberbegriffs des Anspruchs 5. Die Erfindung betrifft außerdem ein Verfahren zum Betreiben eines Brennstoffzellensystems mit den Merkmalen des Oberbegriffs des Anspruchs 1.

Üblicherweise umfasst ein Brennstoffzellensystem zumindest eine Brennstoffzelle zum Generieren von elektrischem Strom aus einem Wasserstoffgas enthaltenden Anodengas und einem Sauerstoffgas enthaltenden Kathodengas. Das Anodengas kann dabei mit Hilfe eines Reformers bereitgestellt werden, der das Anodengas aus einem Wasserstoff enthaltenden Brennstoff, vorzugsweise ein Kohlenwasserstoff, und einem Sauerstoff enthaltenden Oxidator, zum Beispiel Luft, generiert.

Im Betrieb des Reformers können sich grundsätzlich Verunreinigungen, wie zum Beispiel Rußpartikel, bilden, insbesondere während einer Warmlaufphase oder Startphase des Reformers beziehungsweise des Brennstoffzellensystems. Diese Verunreinigungen können sich einerseits an einem Elektrolyten der Brennstoffzelle und andererseits an einem Katalysator des Reformers ablagern. Diese Ablagerungen reduzieren die aktive Oberfläche des Elektrolyten beziehungsweise des Katalysators. Mit dieser Verunreinigung nimmt somit der Wirkungsgrad des Brennstoffzellensystems ab.

Aus der DE 199 61 057 A1 sind ein Brennstoffzellensystem sowie ein zugehöriges Betriebsverfahren bekannt, wobei das Brennstoffzellensystem zumindest eine Brennstoffzelle sowie einen Reformer und einen Restgasbrenner umfasst. Außerdem ist eine Wasserentnahmeeinrichtung vorgesehen, mit deren Hilfe aus dem Brennerabgas des Restgasbrenners Wasser entnommen werden kann. Des Weiteren ist eine Wasserzuführeinrichtung vorgesehen, mit deren Hilfe das dem Brennerabgas entnommene Wasser dem Reformer zugeführt werden kann.

Auch aus der US 4 650 727 A ist ein Brennstoffzellensystem bekannt, bei dem Brennerabgas eines Restgasbrenners Wasser durch Kondensation entzogen wird, in einem Tank gespeichert und einem Verdampfer des Reformers zugeführt wird.

Schließlich ist aus der DE 44 46 841 A1 ebenfalls ein Brennstoffzellensystem bekannt, bei dem Wasser durch Kondensation einem Brennerabgas eines Restgasbrenners entzogen wird und anschließend einem Reformer zugeführt wird.

Die vorliegende Erfindung beschäftigt sich mit dem Problem, für ein Brennstoffzellensystem beziehungsweise für ein zugehöriges Betriebsverfahren eine verbesserte Ausführungsform anzugeben, die es insbesondere ermöglicht, die Ablagerungen in der Brennstoffzelle beziehungsweise im Reformer zu reduzieren beziehungsweise zu entfernen, wobei diese Regeneration insbesondere während des ordnungsgemäßen, normalen Betriebs des Brennstoffzellensystems durchführbar sein soll.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Reformer und/oder die Brennstoffzelle mit Hilfe von Wasser beziehungsweise Wasserdampf zu regenerieren, das auf geeignete Weise dem Reformer beziehungsweise der Brennstoffzelle eingangsseitig zugeführt wird. Das hierzu benötigte Wasser kann dabei einem Brennerabgas entnommen werden, das in einem Restgasbrenner bei der Verbrennung von Wasserstoffgas enthaltenden Anodenabgas mit Sauerstoffgas enthaltenden Kathodenabgas entsteht. Bei der Reaktion von Wasserstoff mit Sauerstoff entsteht Wasser, so dass das Brennerabgas Wasser enthält. Dieses Wasser kann nun erfindungsgemäß dem Brennerabgas entnommen werden und dem Reformer beziehungsweise der Brennstoffzelle zu deren Regeneration zugeführt werden. Mit Hilfe von Wasser beziehungsweise Wasserdampf lassen sich Rußablagerungen bei entsprechenden Temperaturen vergasen, das bedeutet, dass das Wasser mit dem Kohlenstoff reagiert und dabei Wasserstoff und Kohlendioxid bildet. Somit lassen sich gegebenenfalls anfallende Rußablagerungen in der Brennstoffzelle beziehungsweise im Reformer entfernen.

Erfindungsgemäß wird dem Reformer Anodenabgas von der Brennstoffzelle rückgeführt und das Wasser wird dem der Brennstoffzelle zugeführten Anodengas und/oder dem dem Reformer rückgeführten Anodenabgas zugeführt. Da sowohl das Anodengas als auch das rückgeführte Anodenabgas vergleichsweise hohe Temperaturen besitzen, kann das zugeführte Wasser rasch verdampfen bzw. gasförmig werden.

Da das zur Regeneration benötigte Wasser innerhalb des Brennstoffzellensystems ohnehin bereitgestellt werden kann und somit eine externe Wasserversorgung entfällt, lässt sich eine derartige Regeneration vergleichsweise preiswert realisieren.

Gemäß einer vorteilhaften Ausführungsform kann das Wasser dem Brennerabgas durch Kondensation entnommen werden. Hierzu wird das Brennerabgas unter den Taupunkt des Wassers abgekühlt. Das sich dabei bildende Kondensat kann dann vergleichsweise einfach, beispielsweise mit einem geeigneten Kondensatabscheider, aus dem Brennerabgas entnommen werden. Das flüssige Wasser lässt sich außerdem einfach sammeln, zum Beispiel in einem entsprechenden Wasserspeicher, wodurch Betriebsphasen des Brennstoffzellensystems, in denen vergleichsweise viel Wasser im Brennerabgas enthalten ist, zum Aufladen beziehungsweise Befüllen des Wasserspeichers genutzt werden können, so dass auch in Betriebsphasen, in denen vergleichsweise wenig Wasser im Brennerabgas enthalten ist, eine Regeneration des Reformers und/oder der Brennstoffzelle mit Wasser aus dem Wasserspeicher durchführbar ist.

Des weiteren kann das flüssige Wasser besonders einfach in einen dem Reformer oder der Brennstoffzelle zugeführten Gasstrom eingedüst werden, so dass es verdampft und anschließend gasförmig in den Reformer beziehungsweise die Brennstoffzelle eintritt.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

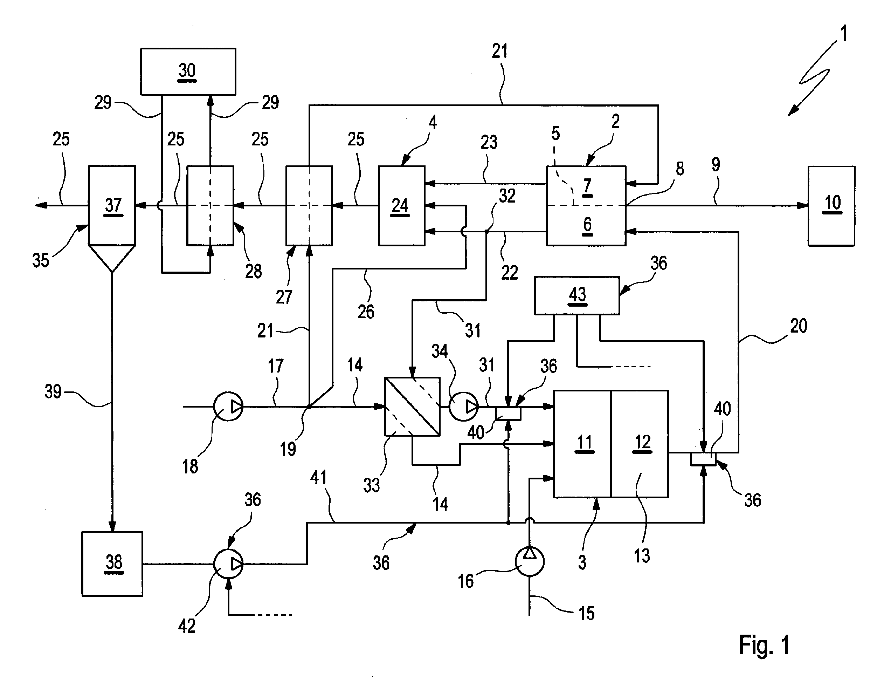

Die einzige Fig. 1 zeigt eine stark vereinfachte, schaltplanartige Prinzipdarstellung eines Brennstoffzellensystems.

Entsprechend Fig. 1 umfasst ein Brennstoffzellensystem 1, das in einem Fahrzeug angeordnet sein kann, zumindest eine Brennstoffzelle 2, einen Reformer 3 und einen Restgasbrenner 4. Die Brennstoffzelle 2 dient zur Generierung von elektrischem Strom aus einem Wasserstoffgas enthaltenden Anodengas und einem Sauerstoffgas enthaltenden Kathodengas. Hierzu weist die Brennstoffzelle 2 einen Elektrolyten 5 auf, der in der Brennstoffzelle 2 eine Anodenseite 6 von einer Kathodenseite 7 trennt. Üblicherweise umfasst die Brennstoffzelle 2 eine Vielzahl einzelner Brennstoffzellenelemente, die aufeinandergestapelt sind, so dass die Brennstoffzelle 2 in der Regel auch als "STACK" bezeichnet wird. Bei der Brennstoffzelle 2 handelt es sich vorzugsweise um eine Hochtemperatur-Brennstoffzelle, die insbesondere als Festkörper-Brennstoffzelle ausgeführt sein kann, vorzugsweise als SOFC-Brennstoffzelle. Alternativ ist es grundsätzlich auch möglich, die Brennstoffzelle 2 als Niedertemperatur-Brennstoffzelle auszubilden, insbesondere als PEM-Brennstoffzelle, die mit einer Protonen-Transport-Membran beziehungsweise mit einer Polymer-Elektrolyt-Membran arbeitet. Die Brennstoffzelle 2 weist zumindest einen elektrischen Anschluss 8 auf, an dem über eine entsprechende Stromleitung 9 der von der Brennstoffzelle 2 generierte elektrische Strom abgreifbar und einem grundsätzlich beliebigen elektrischen Verbraucher 10 zuführbar ist. Sofern das Brennstoffzellensystem 1 in einem Kraftfahrzeug angeordnet ist, handelt es sich beim Verbraucher 10 beispielsweise um ein elektrisches Bordnetz des Fahrzeugs, so dass grundsätzlich sämtliche elektrischen Verbraucher des Fahrzeugs mit Hilfe des Brennstoffzellensystems 1 mit elektrischer Energie versorgt werden können. Ebenso kann vorgesehen sein, dass das Brennstoffzellensystem 1 lediglich zur elektrischen Versorgung einzelner spezieller elektrischer Verbraucher 10 des Fahrzeugs verwendet wird, zum Beispiel wenn eine Brennkraftmaschine des Fahrzeugs ausgeschaltet ist.

Der Reformer 3 ist so ausgestaltet, dass er ein Wasserstoffgas enthaltendes Reformatgas, nämlich das Anodengas, aus einem Wasserstoff enthaltenden Brennstoff und einem Sauerstoff enthaltenden Oxidator generieren kann. Beim Oxidator handelt es sich vorzugsweise um Luft. Beim Brennstoff handelt es sich vorzugsweise um einen beliebigen Kohlenwasserstoff, wie zum Beispiel Diesel, Benzin, Biodiesel, Erdgas. Vorzugsweise verwendet das Brennstoffzellensystem 1 als Brennstoff für den Reformer 3 einen Kraftstoff, der in einem mit dem Brennstoffzellensystem 1 ausgestatteten Kraftfahrzeug ohnehin zur Versorgung der Brennkraftmaschine des Fahrzeugs zur Verfügung steht. Der Reformer 3 weist eingangsseitig einen Verdampfungs- und Gemischbildungsabschnitt 11 auf und enthält ausgangsseitig einen Reformatbildungsabschnitt 12, in dem ein Katalysator 13 angeordnet sein kann. Über eine Oxidatorleitung 14 wird dem Reformer 3 eingangsseitig der Oxidator zugeführt. Mit einer Brennstoffleitung 15 wird dem Reformer 3 eingangsseitig der Brennstoff zugeführt. Hierzu kann die Brennstoffleitung 15 eine Fördereinrichtung 16, insbesondere eine Pumpe, enthalten, die den Brennstoff zum Reformer 3 hin antreibt. Im vorliegenden Fall zweigt die Oxidatorleitung 14 von einer Versorgungsleitung 17 ab, in der eine Fördereinrichtung 18, zum Beispiel eine Pumpe oder ein Gebläse, angeordnet ist, um den Oxidator anzutreiben. Eine entsprechende Abzweigstelle ist hier mit 19 bezeichnet. Im Verdampfungs- und Gemischbildungsabschnitt 11 erfolgt eine Verdampfung des in der Regel flüssigen Brennstoffs. Die hierzu erforderliche Wärme kann beispielsweise mittels kalter Verbrennung beziehungsweise kalter Flamme erzeugt werden. Des weiteren erfolgt hier eine Durchmischung des verdampften Brennstoffs mit dem gasförmigen Oxidator. Das dem Reformatbildungsabschnitt 12 zugeführte Gemisch ist unterstöchiometrisch, wodurch im Katalysator 13 eine partielle Oxidation realisierbar ist, um so das gewünschte Reformat beziehungsweise Anodengas zu generieren. Das Anodengas wird über eine Anodengasleitung 20 von der Ausgangsseite des Reformers 3 an eine anodenseitige Eingangsseite der Brennstoffzelle 2 geleitet.

Zur Versorgung der Kathodenseite 7 mit Kathodengas, bei dem es sich vorzugsweise um Luft handelt, ist eine Kathodengasleitung 21 vorgesehen, die beispielsweise ebenfalls bei der Abzweigstelle 19 von der Versorgungsleitung 17 abzweigt, so dass eine gemeinsame Fördereinrichtung 18 ausreicht, die Brennstoffzelle 2 und den Reformer 3 mit Oxidator beziehungsweise Kathodengas zu versorgen.

Je nach Strombedarf enthält ein Anodenabgas, das die Brennstoffzelle 2 an der Anodenseite 6 verlässt, mehr oder weniger Wasserstoffgas. Ebenso enthält ein Kathodenabgas, das die Brennstoffzelle 2 an der Kathodenseite 7 verlässt, mehr oder weniger Sauerstoffgas. Das Anodenabgas wird über eine Anodenabgasleitung 22 dem Restgasbrenner 4 zugeführt. Unabhängig davon wird das Kathodenabgas über eine Kathodenabgasleitung 23 ebenfalls dem Restgasbrenner 4 zugeführt. Vorzugsweise kommt es erst im Restgasbrenner 4 zu einer Durchmischung von Anodenabgas und Kathodenabgas in einem Brennraum 24 des Restgasbrenners. Der Restgasbrenner 4 ist so ausgestaltet, dass darin eine Verbrennung von Anodenabgas mit Kathodenabgas realisierbar ist, wobei vergleichsweise heiße Brennerabgase entstehen, die aus dem Brennraum 24 beziehungsweise vom Restgasbrenner 3 über eine Brennerabgasleitung 25 abgeführt werden. Zusätzlich kann an den Restgasbrenner 4, vorzugsweise kathodenseitig, eine Kühlgasleitung 26 angeschlossen sein, über die ein Kühlgas, zum Beispiel Luft, in den Brennraum 24 einbringbar ist. Vorzugsweise kann diese Kühlgasleitung 26 von der Versorgungsleitung 17 abzweigen, zum Beispiel bei der Abzweigstelle 19. Der Restgasbrenner 4 kann - wie hier gezeigt - bezüglich der Brennstoffzelle 2 ein separates Bauteil bilden. Grundsätzlich ist jedoch eine Ausführungsform denkbar, bei welcher der Restgasbrenner 4 ausgangsseitig in die Brennstoffzelle 2 integriert ist.

In der Brennerabgasleitung 25 kann zumindest ein Wärmeübertrager angeordnet sein. Im dargestellten Ausführungsbeispiel sind zwei Wärmeübertrager vorgesehen, nämlich ein Hauptwärmeübertrager 27 und ein Zusatzwärmeübertrager 28. Der Hauptwärmeübertrager 27 ist einerseits in die Brennerabgasleitung 25 und andererseits in die Kathodengasleitung 21 eingebunden, wodurch es möglich ist, Wärme vom Brennerabgas auf das Kathodengas zu übertragen. Hierdurch lässt sich der Brennstoffzellenprozess verbessern. Der Hauptwärmeübertrager kann - wie hier gezeigt - bezüglich des Restgasbrenners 4 ein separates Bauteil bilden. Grundsätzlich kann der Hauptwärmeübertrager jedoch baulich in die Ausgangsseite des Restgasbrenners 4 integriert sein.

Der Zusatzwärmeübertrager 28 ist einerseits in die Brennerabgasleitung 25 und andererseits in eine Heizleitung 29 integriert und ermöglicht dadurch die Übertragung von Wärme aus dem Brennerabgas auf ein in der Heizleitung 29 transportiertes Wärmeübertragungsmedium. Die Heizleitung 29 dient zweckmäßig zur Versorgung einer Wärmesenke 30 oder eines Wärmeverbrauchers 30 mit Wärme. Beim Wärmeverbraucher 30 kann es sich beispielsweise um ein Heizgerät handeln, mit dessen Hilfe ein Fahrzeuginnenraum beheizt werden kann. Ebenso kann es sich bei der Wärmesenke 30 beispielsweise um einen Kühlkreis einer Brennkraftmaschine handeln, die in dem mit dem Brennstoffzellensystem 1 ausgestatteten Fahrzeug angeordnet ist. Über die Abwärme des Brennerabgases 25 kann somit die Brennkraftmaschine aufgeheizt werden. Der Zusatzwärmeübertrager 28 ist hier bezüglich des Hauptwärmeübertragers 27 als separates Bauteil ausgestaltet. Grundsätzlich ist auch eine Ausführungsform möglich, bei welcher der Hauptwärmeübertrager 27 und der Zusatzwärmeübertrager 28 ein integrales Bauteil bilden.

Das Brennstoffzellensystem 1 weist außerdem eine Rezirkulationsleitung 31 auf, die zum Beispiel bei einer Abzweigstelle 32 von der Anodenabgasleitung 22 abzweigt und an den Reformer 3 eingangsseitig angeschlossen ist. Über die Rezirkulationsleitung 31 kann ein Teil des Anodenabgases zur Eingangsseite des Reformers 3 rückgeführt werden, was den Reformerprozess verbessert und insbesondere den Wirkungsgrad des Brennstoffzellensystems 1 erhöht. In der Rezirkulationsleitung 31 kann ein Rezirkulationswärmeübertrager 33 eingebunden sein, der außerdem zum Beispiel in die Oxidatorleitung 14 eingebunden sein kann. Grundsätzlich ist es auch möglich, den Rezirkulationswärmeübertrager 33 ebenfalls in die Kathodengasleitung 21 einzubinden. Mit Hilfe des Rezirkulationswärmeübertragers 33 ist es möglich, Wärme vom rückgeführten Anodenabgas zum Beispiel auf den Oxidator zu übertragen. Die hierdurch erzielte Kühlung des rückgeführten Anodenabgases ermöglicht es, stromab des Rezirkulationswärme-übertragers 33 in der Rezirkulationsleitung 31 eine Fördereinrichtung 34, zum Beispiel eine Pumpe, ein Gebläse oder einen Verdichter, anzuordnen, die aufgrund der reduzierten Anforderungen an die Temperaturbeständigkeit vergleichsweise preiswert realisierbar ist.

Das erfindungsgemäße Brennstoffzellensystem 1 ist außerdem mit einer Wasserentnahmeeinrichtung 35 sowie mit einer Wasserzuführeinrichtung 36 ausgestattet. Die Wasserentnahmeeinrichtung 35 ist so ausgestaltet, dass sie es ermöglicht, dem Brennerabgas Wasser zu entnehmen. Beispielsweise kann die Wasserentnahmeeinrichtung 35 zu diesem Zweck einen Kondensatabscheider 37 aufweisen, der in der Brennerabgasleitung 25 angeordnet ist. Insbesondere mit Hilfe der Wärmeübertrager 27, 28 ist es grundsätzlich möglich, das Brennerabgas unter den Taupunkt von Wasser abzukühlen, wodurch das im Brennerabgas mitgeführte Wasser kondensiert und in dem stromab der Wärmeübertrager 27, 28 angeordneten Kondensatabscheider 37 aus dem Brennerabgas ausgeschieden werden kann. Das ausgeschiedene, flüssige Wasser kann beispielsweise in einem Wasserspeicher 38 gesammelt beziehungsweise gespeichert werden. Dabei verbindet beispielsweise eine Sammelleitung 39 den Kondensatabscheider 37 mit dem Wasserspeicher 38. In der Sammelleitung 39 kann ein Filter angeordnet sein, um Verunreinigungen aus dem Kondensat herauszufiltern.

Die Wasserzuführeinrichtung 36 ist so ausgestaltet, dass damit Wasser dem Reformer 3 und/oder der Brennstoffzelle 2 zuführbar ist. Beispielsweise weist die Wasserzuführeinrichtung 36 hierzu zumindest eine Einspritzdüse 40 auf. Im gezeigten Beispiel sind zwei derartige Einspritzdüsen 40 exemplarisch angedeutet. Mit Hilfe dieser Einspritzdüsen 40 kann das Wasser insbesondere in flüssiger Form in einen dem Reformer 3 zugeführten Gasstrom beziehungsweise in einen der Brennstoffzelle 2 zugeführten Gasstrom eingedüst werden. Innerhalb dieses Gasstroms kommt es dann zweckmäßig aufgrund der relativ hohen Temperaturen zu einer Verdampfung des Wassers, so dass das Wasser letztlich gasförmig dem Reformer 3 beziehungsweise der Brennstoffzelle 2 zugeführt wird. Beispielsweise ist eine dieser Einspritzdüsen 40 an oder in der Rezirkulationsleitung 31, insbesondere stromab der Fördereinrichtung 34, angeordnet. Mit dieser Einspritzdüse 40 kann die Wasserzuführeinrichtung 36 dem Reformer 3 Wasser beziehungsweise Wasserdampf eingangsseitig zuführen. Alternativ kann diese Einspritzdüse 40 beispielsweise auch an oder in der Oxidatorleitung 14 stromab des Rezirkulationswärmeübertragers 33 angeordnet sein. Ebenso ist es grundsätzlich möglich, diese Einspritzdüse 40 in oder an der Brennstoffleitung 15 stromab der Fördereinrichtung 16 anzuordnen, sofern dem Reformer 3 ein gasförmiger Brennstoff zugeführt wird.

Für die Versorgung der Brennstoffzelle 2 mit Wasser beziehungsweise Wasserdampf kann eine solche Einspritzdüse 40 an oder in der Anodengasleitung 20 angeordnet sein. Auf diese Weise gelangt das Wasser beziehungsweise der Wasserdampf auf die Anodenseite 6 der Brennstoffzelle 2. Die Wasserzuführeinrichtung 36 umfasst ferner eine Wasserzuführleitung 41, die einenends zum Beispiel an den Wasserspeicher 38 und anderenends an die Einspritzdüsen 40 angeschlossen ist und in der eine Fördereinrichtung 42, z.B. eine Pumpe, angeordnet sein kann, um das Wasser vom Wasserspeicher 38 zu den Einspritzdüsen 40 anzutreiben.

Die Wasserzuführeinrichtung 36 umfasst außerdem eine Zuführsteuerung 43, die insbesondere zur Betätigung der Einspritzdüsen 40 sowie der Fördereinrichtung 42 dient und mit deren Hilfe die Zumessung von Wasser zum Reformer 3 sowie zur Brennstoffzelle 2 steuerbar ist.

### Das Brennstoffzellensystem 1 arbeitet wie folgt:

Im Betrieb des Brennstoffzellensystems 1, insbesondere beim Hochfahren oder Warmlaufen des Brennstoffzellensystems 1 können sich Rußpartikel bilden, die sich insbesondere am Katalysator 13 sowie an der Anode beziehungsweise an der Anodenseite des Elektrolyten 5 ablagern können und so die jeweilige aktive Oberfläche reduzieren, was die Effektivität des Brennstoffzellensystems 1 entsprechend senkt. Insbesondere bei einem derartigen Warmlaufbetrieb fällt im Brennabgas vergleichsweise viel Wasser an, insbesondere dann, wenn die Brennstoffzelle 2 ihre Betriebstemperatur noch nicht erreicht hat, so dass daran kein Strom abgreifbar ist und das vom Reformer 3 generierte Anodengas quasi unverändert aus der Brennstoffzelle 2 austritt. Über die Wärmeübertrager 27 und 28 erfolgt eine Abkühlung des Brennerabgases zweckmäßig unter die Tautemperatur des Wassers, wodurch dieses besonders einfach über den Kondensatabscheider 37 von der Wasserentnahmeeinrichtung 35 aus den Brennerabgas entnehmbar ist. Das so entnommene Wasser kann im Wasserspeicher 38 gesammelt werden.

Die Zuführsteuerung 43 kann nun zum Regenerieren des Reformers 3 beziehungsweise des Katalysators 13 und/oder zum Regenerieren der Brennstoffzelle 2 beziehungsweise der Anode Wasser dem Reformer 3 beziehungsweise der Brennstoffzelle 2 eingangsseitig zuführen. Vorzugsweise wird das Wasser in die Rezirkulationsleitung 31 eingedüst, wodurch es aufgrund des vergleichsweise heißen rückgeführten Anodenabgases verdampft und gasförmig in den Reformer 3 eintritt und zum Katalysator 13 gelangt. Zusätzlich oder alternativ kann das Wasser in die Anodengasleitung 20 eingedüst werden, wodurch es aufgrund der relativ hohen Temperatur des Anodengases verdampft und gasförmig in die Brennstoffzelle 2 eintritt und dort die Anode beziehungsweise die Anodenseite des Elektrolyten 5 beaufschlagen kann. Durch die Regeneration kann die Rußablagerung im Reformer 3 beziehungsweise an dessen Katalysator 13 und/oder die Rußablagerung in der Brennstoffzelle 2 beziehungsweise an der Anode beziehungsweise am Elektrolyten 5 entfernt oder zumindest reduziert werden, indem der Kohlenstoff mit dem Wasser bei entsprechenden Temperaturen zu Wasserstoff und Kohlendioxyd umgesetzt wird.

Der Regenerationsprozess des Reformers 3 und/oder der Brennstoffzelle 2 kann z.B. mittels entsprechender Kennfelder gesteuert werden und/oder mittels einer entsprechenden Sensorik geregelt werden. Vorzugsweise wird diese Regeneration bereits während der Warmlaufphase des Brennstoffzellensystems 1 realisiert, damit das Brennstoffzellensystem 1 vergleichsweise rasch zur Realisierung eines besonders hohen Wirkungsgrads bereitsteht.

## Patentansprüche

1. Verfahren zum Betreiben eines Brennstoffzellensystems (1), insbesondere in einem Kraftfahrzeug, umfassend
- wenigstens eine Brennstoffzelle (2) zum Generieren von elektrischem Strom aus einem Wasserstoffgas enthaltenden Anodengas und einem Sauerstoffgas enthaltenden Kathodengas,
- einen Reformer (3) zum Generieren des Anodengases aus einem Wasserstoff enthaltenden Brennstoff und einem Sauerstoff enthaltenden Oxidator,
- einen Restgasbrenner (4) zum Verbrennen von Wasserstoffgas enthaltenden Anodenabgas der Brennstoffzelle (2) mit Sauerstoffgas enthaltenden Kathodenabgas der Brennstoffzelle (2),
- bei dem aus einem Brennerabgas des Restgasbrenners (4) Wasser entnommen und der Brennstoffzelle (2) und/oder dem Reformer (3) zugeführt wird,
**dadurch gekennzeichnet,**
**dass** dem Reformer (3) Anodenabgas von der Brennstoffzelle (2) rückgeführt wird und das entnommene Wasser dem der Brennstoffzelle (2) zugeführten Anodengas und/oder dem dem Reformer (3) rückgeführten Anodenabgas zugeführt wird.

2. Verfahren nach Anspruch 1,
**dadurch gekennzeichnet,**
**dass** das Wasser aus dem Brennerabgas auskondensiert wird.

3. Verfahren nach Anspruch 1 oder 2,
**dadurch gekennzeichnet,**
**dass** das Wasser in einem Wasserspeicher (38) gesammelt wird.

4. Verfahren nach einem der Ansprüche 1 bis 3,
**dadurch gekennzeichnet,**
**dass** das Wasser der Brennstoffzelle (2) und/oder dem Reformer (3) gasförmig zugeführt oder in flüssiger Form eingedüst wird.

5. Brennstoffzellensystem, insbesondere in einem Kraftfahrzeug,
- mit wenigstens einer Brennstoffzelle (2) zum Generieren von elektrischem Strom aus einem Wasserstoffgas enthaltenden Anodengas und einem Sauerstoffgas enthaltenden Kathodengas,
- mit einem Reformer (3) zum Generieren des Anodengases aus einem Wasserstoff enthaltenden Brennstoff und einem Sauerstoff enthaltenden Oxidator,
- mit einem Restgasbrenner (4) zum Verbrennen von Wasserstoffgas enthaltenden Anodenabgas der Brennstoffzelle (2) mit Sauerstoffgas enthaltende Kathodenabgas der Brennstoffzelle (2),
- mit einer Wasserentnahmeeinrichtung (35) zum Entnehmen von Wasser aus einem Brennerabgas des Restgasbrenners (4),
- mit einer Wasserzuführeinrichtung (36) zum Zuführen von Wasser zur Brennstoffzelle (2) und/oder zum Reformer (3),
**dadurch gekennzeichnet,**
- **dass** die Wasserzuführeinrichtung (36) wenigstens eine Einspritzdüse (40) aufweist, mit der das Wasser in flüssiger Form in einen dem Reformer (3) zugeführten Gasstrom und/oder in einem der Brennstoffzelle (2) zugeführten Gasstrom eindüsbar ist,
- **dass** die Wasserzuführeinrichtung (36) an eine das Anodengas der Brennstoffzelle (2) zuführende Anodengasleitung (20) und/oder an eine Anodenabgas von der Brennstoffzelle (2) zum Reformer (3) zurückführende Rezirkulationsleitung (31) angeschlossen ist.

6. Brennstoffzellensystem nach Anspruch 5,
**dadurch gekennzeichnet,**
**dass** die Wasserentnahmeeinrichtung (35) einen Kondensatabscheider (37) aufweist, der in einer das Brennerabgas vom Restgasbrenner (4) abführenden Brennerabgasleitung (25) angeordnet ist.

7. Brennstoffzellensystem nach Anspruch 5 oder 6,
**dadurch gekennzeichnet,**
**dass** zumindest ein Wärmeübertrager (27, 28) in einer das Brennerabgas vom Restgasbrenner (4) abführenden Brennerabgasleitung (25) angeordnet ist, mit dem das Brennerabgas unter den Taupunkt des Wassers abkühlbar ist.

8. Brennstoffzellensystem nach Anspruch 7,
**dadurch gekennzeichnet,**
- **dass** ein Hauptwärmeübertrager (27) vorgesehen ist, der einerseits in die Brennerabgasleitung (25) und andererseits in eine die Brennstoffzelle (2) mit Kathodengas versorgende Kathodengasleitung (21) eingebunden ist, und/oder
- **dass** zumindest ein Zusatzwärmeübertrager (28) vorgesehen ist, der einerseits in die Brennerabgasleitung (25), insbesondere stromab des Hauptwärmeübertragers (27) und andererseits in eine Heizleitung (29) zur Versorgung einer Wärmesenke (30) oder eines Wärmeverbrauchers (30) mit Wärme eingebunden ist, und/oder
- **dass** der Kondensatabscheider (37) stromab des jeweiligen Wärmeübertragers (27, 28) in der Brennerabgasleitung (25) angeordnet ist.

9. Brennstoffzellensystem nach einem der Ansprüche 5 bis 8,
**dadurch gekennzeichnet,**
**dass** ein Wasserspeicher (38) zum Sammeln von, insbesondere flüssigen, dem Brennerabgas entnommenen Wasser vorgesehen ist, der einerseits mit der Wasserentnahmeeinrichtung (35) und andererseits mit der Wasserzuführeinrichtung (36) verbunden ist.

## Claims

1. A method for operating a fuel cell system (1), in particular in a motor vehicle, comprising
- at least one fuel cell (2) for generating electric current from a hydrogen gas-containing anode gas and an oxygen gas-containing cathode gas,
- a reformer (3) for generating the anode gas from a hydrogen-containing fuel and an oxygen-containing oxidant,
- a residual gas burner (4) for burning anode waste gas of the fuel cell (2) containing hydrogen gas with cathode waste gas of the fuel cell (2) containing oxygen gas,
- in which water is removed from a burner waste gas of the residual gas burner (4) and fed to the fuel cell (2) and/or the reformer (3),
**characterized in that** anode waste gas from the fuel cell (2) is returned to the reformer (3) and the removed water is fed to the anode gas fed to the fuel cell (2) and/or fed to the anode waste gas returned to the reformer (3).

2. The method according to Claim 1, **characterized in that** the water is condensated out of the burner waste gas.

3. The method according to Claim 1 or 2, **characterized in that** the water is collected in a water storage unit (38).

4. The method according to any one of the Claims 1 to 3, **characterized in that** the water is fed to the fuel cell (2) and/or to the reformer (3) in a gaseous manner or injected in liquid manner.

5. A fuel cell system, in particular in a motor vehicle,
- with at least one fuel cell (2) for generating electric current from a hydrogen gas-containing anode gas and an oxygen gas-containing cathode gas,
- with a reformer (3) for generating the anode gas from a hydrogen-containing fuel and an oxygen-containing oxidant,
- with a residual gas burner (4) for burning anode waste gas of the fuel cell (2) containing hydrogen gas with cathode waste gas of the fuel cell (2) containing oxygen gas,
- with a water removing device (35) for removing water from a burner waste gas of the residual gas burner (4),
- with a water feeding device (6) for feeding water to the fuel cell (2) and/or to the reformer (3),
**characterized**
- **in that** the water feeding device (36) comprises at least one injection nozzle (40), with which the water can be injected in the liquid form into a gas flow fed to the reformer (3) and/or into a gas flow fed to the fuel cell (2),
- **in that** the water feeding device (36) is connected to an anode gas line (20) feeding the anode gas to the fuel cell (2) and/or to a recirculation line (31) returning anode waste gas from the fuel cell (2) to the reformer (3).

6. The fuel cell system according to Claim 5, **characterized in that** the water removing device (35) comprises a condensate separator (37), which is arranged in a burner waste gas line (25) discharging the burner waste gas from the residual gas burner (4).

7. The fuel cell system according to Claim 5 or 6, **characterized in that** at least one heat transfer device (27, 28) is arranged in a burner waste gas line (25) discharging the burner waste gas from the residual gas burner (4), with which the burner waste gas can be cooled to below the dew point of the water.

8. The fuel cell system according to Claim 7, **characterized**
- **in that** a main heat transfer device (27) is provided, which on the one hand is incorporated in the burner waste gas line (25) and on the other hand in a cathode gas line (21) supplying the fuel cell (2) with cathode gas, and/or
- **in that** at least one additional heat transfer device (28) is provided, which on the one hand is incorporated in the burner waste gas line (25), in particular downstream of the main heat transfer device (27) and on the other hand in a heating line (29) for supplying a heat sink (30) or a heat consumer (30) with heat, and/or
- **in that** the condensate separator (37) is arranged in the burner waste gas line (25) downstream of the respective heat transfer device (27).

9. The fuel cell system according to any one of the Claims 5 to 8, **characterized in that** a water storage unit (38) for collecting of in particular liquid water removed from the burner waste gas is provided, which on the one hand is connected to the water removing device (35) and on the other hand to the water feeding device (36).

## Revendications

1. Procédé d'exploitaton d'un système de cellule de combustible (1), notamment dans un véhicule automobile, comprenant :
- au moins une cellule de combustible (2)pour générer un courant électrique à partir d'un gaz d'anode contenant de l'hydrogène gazeux et d'un gaz de cathode contenant de l'oxygène gazeux,
- un reformeur (3) pour générer le gaz d'anode à partir d'un combustible contenant de l'hydrogène et d'un oxydant contenant de l'oxygène,
- un brûleur de gaz résiduel (4) pour brûler l'effluent gazeux anodique contenant l'hydrogène gazeux de la cellule de combustible (2) avec l'effluent gazeux cathodique contenant l'oxygène gazeux de la cellule de combustible (2),
- dans lequel de l'eau est extraite d'un effluent gazeux de brûleur du brûleur de gaz résiduel (4) et est introduit dans la cellule de combustible (2) et/ou dans le reformeur (3),
**caractérisé en ce que** l'effluent gazeux anodique de la cellule de combustible (2) est réintroduit dans le reformeur (3) et l'eau extraite est réintroduite dans le gaz d'anode alimenté dans la cellule de combustible et/ou dans l'effluent gazeux anodique réintroduit dans le reformeur (3).

2. Procédé selon la revendication 1, **caractérisé en ce que** l'eau présente dans l'effluent gazeux de brûleur est condensée.

3. Procédé selon les revendications 1 ou 2, **caractérisé en ce que** l'eau est accumulée dans un accumulateur d'eau (38).

4. Procédé selon une des revendications 1 à 3, **caractérisé en ce que** l'eau est alimentée sous forme gazeuse dans la cellule de combustible (2) et/ou le reformeur (3) ou est injectée sous forme liquide.

5. Système de cellule de combustible, notamment dans un véhicule automobile,
- comportant au moins une cellule de combustible (2) pour générer un courant électrique à partir d'un gaz d'anode contenant de l'hydrogène gazeux et un gaz de cathode contenant de l'oxygène gazeux,
- comportant un reformeur (3) pour générer le gaz d'anode à partir d'un combustible contenant de l'hydrogène et d'un oxydant contenant de l'oxygène,
- comportant un brûleur de gaz résiduel (4) pour brûler l'effluent gazeux anodique contenant l'hydrogène gazeux de la cellule de combustible (2) avec l'effluent gazeux cathodique contenant l'oxygène gazeux de la cellule de combustible (2),
- comportant un dispositif d'extraction d'eau (35) pour éliminer l'eau d'un effluent gazeux de brûleur du brûleur de gaz résiduel (4),
- comportant un dispositif d'introduction d'eau (36) pour introduire de l'eau dans la cellule de combustible (2) et/ou le reformeur (3), **caractérisé en ce que**
- le dispositif d'introduction d'eau (36) présente au moins une buse d'injection (40), avec laquelle l'eau peut être injectée sous forme liquide dans un courant de gaz alimenté dans la reformeur (3) et/ou dans un courant de gaz alimenté dans la cellule de combustible (2),
- le dispositif d'introduction d'eau (36) est raccordé à une conduite de gaz d'anode introduisant le gaz d'anode dans la cellule de combustible (2) et/ou à une conduite de recirculation (31) réintroduisant un effluent gazeux anodique depuis la cellule de combustible (2) vers le reformeur (3).

6. Système de cellule de combustible selon la revendication 5, **caractérisé en ce que** le dispositif d'extraction d'eau (35) présente un séparateur de condensat (37), qui est disposé dans une conduite d'effluent gazeux de brûleur (25) évacuant l'effluent gazeux de brûleur hors du brûleur de gaz résiduel (4).

7. Système de cellule de combustible selon les revendications 5 ou 6, **caractérisé en ce que** au moins un échangeur thermique (27,28) est disposé dans une conduite d'effluent gazeux de brûleur (25) évacuant l'effluent gazeux de brûleur hors du brûleur de gaz résiduel (4), avec lequel l'effluent gazeux de brûleur peut être refroidi en dessous du point de rosée de l'eau.

8. Système de cellule de combustible selon la revendication 7, **caractérisé en ce que** :
- un échangeur thermique principal (27) est prévu, qui est intégré d'un côté dans la conduite d'effluent gazeux de brûleur (25) et d'un autre côté dans une conduite de gaz de cathode (21) alimentant en gaz de cathode la cellule de combustible (2), et/ou
- au moins un échangeur thermique supplémentaire (28) est prévu, qui est intégré d'un côté dans la conduite d'effluent gazeux de brûleur (25), notamment en aval de l'échangeur thermique principal (27) et d'un autre côté dans une conduite de chauffage (29) pour alimenter en chaleur un dissipateur thermique (30) ou un appareil consommateur de chaleur (30), et/ou
- le séparateur de condensat (37) est disposé en aval de l'échangeur thermique respectif (27,28) dans la conduite d'effluent gazeux de brûleur (25).

9. Système de cellule de combustible selon une des revendications 5 à 8, **caractérisé en ce que** un accumulateur d'eau (38) pour accumuler l'eau extraite de l'effluent gazeux de brûleur, notamment liquide, est prévu, qui est relié d'un côté au dispositif d'extraction d'eau (35) et d'un autre côté au dispositif d'introduction d'eau (36).
